# FASCICULE DE BREVET EUROPEEN

(11) **EP 1 676 627 B1**
(45) Date de publication et mention de la délivrance du brevet: **03.07.2013**
(21) Numéro de dépôt: 06290010.5
(22) Date de dépôt: 04.01.2006
(51) Int. Cl.: B01D 53/86, B01D 53/56, B01D 53/96

(54) **Procédé de dénoxification de gaz dans un réacteur catalytique**
DeNOx Verfahren in einem katalytischen Reaktor
DeNox process in a catalytic reactor

(30) Priorité: 04.01.2005 FR 0550021
(43) Date de publication de la demande: 05.07.2006
(60) Demande divisionnaire: 10015953.2
(73) Titulaire: Vinci Environnement, 92500 Rueil Malmaison (FR)
(72) Inventeur: Morice, Ludovic, 60190 Bailleul le Soc (FR)
(74) Mandataire: Novagraaf Technologies

(56) Documents cités:
- EP-A- 0 957 243
- DE-A1- 10 062 957
- DE-C1- 19 751 663
- FR-A- 2 855 767
- US-B1- 6 340 002

## Description

L'invention concerne un procédé de dénoxification de gaz dans un réacteur catalytique de type « low dust »ainsi qu'une installation de traitement des gaz pour la mise en oeuvre de ce procédé.

On entend par « dénoxification » d'un gaz la réduction par voie catalytique des oxydes d'azotes contenus dans ledit gaz. Les oxydes d'azotes, désignés de façon générale par la formule NOx, comprennent notamment les composés suivants: NO, NO₂, N₂0.

Les procédés de dénoxification s'appliquent notamment aux gaz issus de l'incinération des ordures ménagères, et permettent de diminuer la teneur en oxydes d'azote des gaz finalement rejetés à l'atmosphère, de sorte que cette teneur soit inférieure au seuil réglementaire imposé.

Dans les procédés connus, les gaz à traiter sont introduits en entrée d'un réacteur catalytique, en phase de fonctionnement, transitent par un catalyseur approprié afin de subir la dénoxification souhaitée, avant d'être rejetés à l'atmosphère.

Généralement le procédé de dénoxification par voie catalytique est une étape supplémentaire dans le traitement des gaz. La dénoxification est réalisée après l'étape de dépoussiérage et de déchloration/désulfuration.

Au contact des gaz contenant les oxydes d'azote, le catalyseur se charge progressivement en différents sels issus des réactions de combinaison entre NH₃ et HCl/S0₂ résiduels, et perd de ce fait une partie de son activité. Il est donc nécessaire de régénérer périodiquement le catalyseur, afin qu'il retrouve ses performances, et que, en sortie, les teneurs en NOx restent inférieures au seuil réglementaire.

Ainsi, en phase de régénération, les procédés connus prévoient de faire traverser le catalyseur par un gaz chauffé à une température suffisamment importante pour provoquer la sublimation des sels et leur évacuation sous forme gazeuse (NH₃, SO₂, HGI).

Toutefois, dans les réalisations connues, les gaz issus de la régénération sont évacués de la même façon que les gaz traités, voire simultanément dans un même conduit lorsque le réacteur est pourvu de plusieurs modules dont certains sont en phase de fonctionnement tandis que les autres sont en phase de régénération. Or, les gaz issus de la régénération contiennent sous forme de gaz les polluants issus des sels ôtés du catalyseur. Ainsi, les teneurs maximales réglementaires en polluants des gaz rejetés à l'atmosphère ne sont plus respectées (HGl, S0₂, NH₃)

Le DE10062957 décrit un procédé de dénoxification comprenant une étape de régénération à l'issue de laquelle le gaz sont réintroduits en entrée de l'unité de stockage des NOx.

Toutefois, ce procédé n'est pas suffisamment efficace et la teneur en polluants des gaz rejetés dans l'atmosphère lors de la régénération, reste encore trop élevée.

Le WO 00/76637 décrit un autre procédé de dénoxification appliqué aux gaz d'échappement de moteurs.

Toutefois, dans ce procédé, les gaz issus de la régénération et les gaz traités ne sont pas évacués séparément.

L'invention vise à pallier les problèmes techniques posés par l'art antérieur.

A cet effet, et selon un premier aspect, l'invention concerne un procédé de dénoxification de gaz dans un réacteur catalytique comprenant au moins un module contenant un catalyseur apte à permettre la dénoxification desdits gaz, ledit procédé comprenant :
- une phase de traitement lors de laquelle on introduit en entrée du réacteur les gaz à traiter, on fait passer lesdits gaz à traiter dans au moins un module, puis on évacue en sortie du réacteur les gaz traités ;
- une phase de régénération lors de laquelle on introduit en entrée du réacteur les gaz de régénération, on fait passer lesdits gaz de régénération dans au moins un module à régénérer, puis on évacue en sortie du réacteur les gaz issus de la régénération ;
le procédé prévoyant de réintroduire en entrée du réacteur les gaz issus de la régénération.

Le procédé peut en outre comprendre l'étape consistant à faire passer les gaz issus de la régénération dans au moins un appareil de traitement apte à diminuer la teneur desdits gaz en au moins l'un des composés suivants : S0₂, HGI, avant de réintroduire lesdits gaz en entrée du réacteur. L'ammoniac issu des sels est recyclé dans le réacteur et sert à la dénoxification du gaz à traiter dans les autres modules en fonctionnement

Selon une réalisation possible, le réacteur comprend au moins deux modules, et le procédé comprend les étapes consistant à :
a) introduire les gaz à traiter dans un premier compartiment d'entrée du réacteur et les faire traverser le ou les modules en phase de traitement, puis évacuer les gaz traités dans lesdits modules depuis un premier compartiment de sortie du réacteur ;
b) introduire les gaz de régénération dans un deuxième compartiment d'entrée du réacteur et les faire traverser le ou les modules en phase de régénération, puis évacuer les gaz issus de la régénération depuis un deuxième compartiment de sortie du réacteur, séparément des gaz traités.

Les étapes a) et b) sont par exemple conduites simultanément, les modules fonctionnant en parallèle.

Les gaz de régénération sont par exemple obtenus par chauffage d'au moins une partie des gaz à traiter.

Enfin, selon un second aspect, l'invention concerne une installation de traitement des gaz, pour la mise en oeuvre du procédé tel que précédemment décrit, comprenant :
- un réacteur catalytique comprenant au moins un module contenant un catalyseur apte à permettre la dénoxification desdits gaz ;
- au moins un conduit d'amenée des gaz en entrée du réacteur et au moins un conduit d'évacuation des gaz en sortie du réacteur ;
l'installation comprenant en outre des moyens aptes à permettre d'une part le rejet des gaz traités et d'autre part la réintroduction en entrée des gaz issus de la régénération.

L'installation comprend par exemple un conduit d'évacuation des gaz issus de la régénération connecté à son extrémité aval au conduit d'amenée des gaz à traiter, en amont du réacteur catalytique et, selon une réalisation, un conduit d'évacuation des gaz traités distinct du conduit d'évacuation des gaz issus de la régénération.

En outre, l'installation peut comprendre, en amont du réacteur catalytique, au moins un appareil de traitement apte à diminuer la teneur des gaz à traiter en au moins l'un des composés suivants: SO₂, HCl.

Le conduit d'évacuation des gaz issus de la régénération peut être connecté à son extrémité aval au conduit d'amenée des gaz à traiter, en amont dudit appareil de traitement.

Les autres caractéristiques de l'invention résultent de la description qui suit de modes de réalisation, description effectuée en référence aux figures annexées dans lesquelles :
- la figure 1 est une représentation schématique d'une installation de dénoxification de gaz selon l'invention, comprenant notamment un réacteur catalytique à 4 modules ;
- la figure 2 est une vue en élévation et partiellement en coupe verticale du réacteur catalytique de la figure 1 ;
- la figure 3 est une vue de dessus du réacteur catalytique de la figure 2 ;
- les figures 4 et 5 sont des vues en coupe d'un module du réacteur catalytique,
selon la ligne AA de la figure 2, illustrant l'écoulement des gaz, respectivement en mode de traitement et en mode de régénération.

Une installation 1 de dénoxification de gaz comprend un conduit 2 d'amenée des gaz à traiter 3, issus par exemple d'une installation d'incinération des ordures ménagères.

Les gaz à traiter 3 sont tout d'abord introduits dans différents appareils de traitement préalables, tels qu'un appareil 4 de traitement du HCl, SO₂ et un équipement de filtration 5 permettant un dépoussiérage des gaz 3.

Les gaz à traiter 3 sont ensuite acheminés vers une grille d'injection 6 d'ammoniaque 7, puis introduits, à l'extrémité aval du conduit 2, dans un premier compartiment d'entrée 8 d'un réacteur catalytique 9.

Une partie des gaz à traiter 3 peut être acheminée vers le réacteur 9 via un conduit 10, connecté à son extrémité amont au conduit 2 d'amenée des gaz à traiter 3, en amont du réacteur 9, et, à son extrémité aval, à un deuxième compartiment d'entrée 11 du réacteur 9.

Une vanne 12 permet de réguler la proportion de gaz à traiter 3 passant par le conduit 10. Un brûleur 13, alimenté en combustible exempt de soufre 14, est intercalé dans le conduit 10, de sorte à chauffer les gaz à traiter 3, de sorte à obtenir des gaz de régénération 15.

Le réacteur 9 possède un premier compartiment de sortie 16 depuis lequel sont évacués les gaz traités 17 via un conduit d'évacuation 18, et un deuxième compartiment de sortie 19 depuis lequel sont évacués les gaz issus de la régénération 20 via un conduit d'évacuation 21.

Le conduit d'évacuation 21 des gaz issus de la régénération 20 est connecté, à son extrémité aval, au conduit d'amenée 2, en amont de l'appareil 4.

Le conduit d'évacuation 18 des gaz traités 17 est connecté, à son extrémité aval, à un conduit de sortie 22 débouchant en partie inférieure d'une cheminée 23 par laquelle les gaz traités 17 sont rejetés à l'atmosphère. Une série d'analyseurs 24 permet le contrôle de la teneur des gaz rejetés en différents composés, parmi lesquels: HCl, SO₂, NOx, NH₃, H₂O, COT, CO.

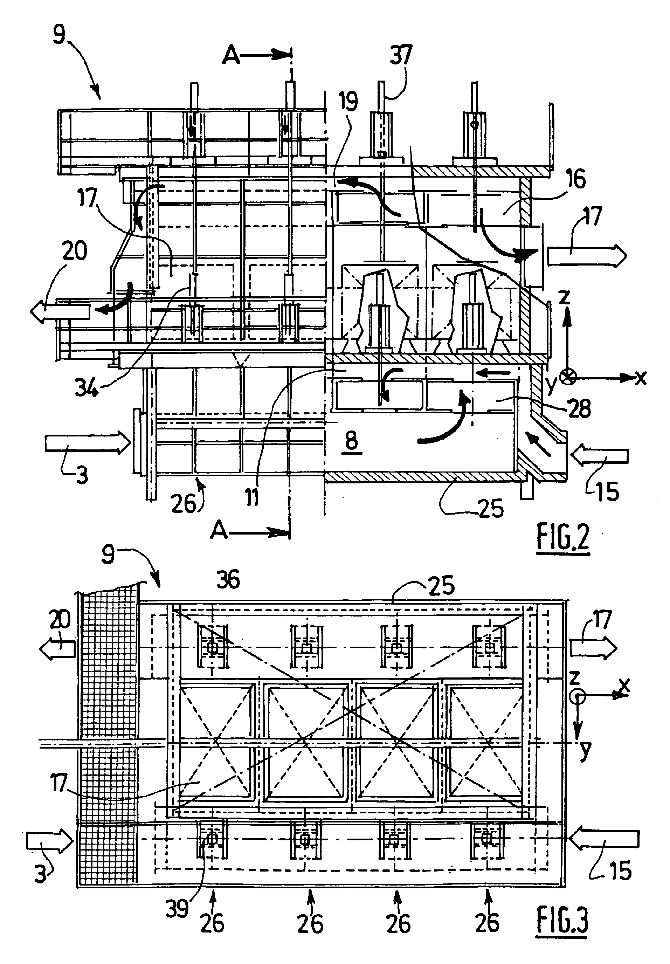

On décrit à présent plus précisément le réacteur catalytique 9 (figures 2 et 3).

Le réacteur 9 comporte une paroi latérale 25 définissant un volume intérieur comportant en partie inférieure les premier et deuxième compartiments d'entrée 8, 11 et en partie supérieure les premier et deuxième compartiments de sortie 16,19.

Dans d'autres modes de réalisation non représentés, on peut toutefois prévoir que la paroi latérale 25 définisse un volume intérieur comportant en partie supérieure les premier et deuxième compartiments d'entrée 8, 11 et en partie inférieure les premier et deuxième compartiments de sortie 16, 19 de sorte à réaliser une circulation descendante des gaz.

Les compartiments 8, 11, 16, 19 sont globalement disposés selon une direction longitudinale x. On définit par ailleurs la direction verticale ascendante z et la direction transversale y telle que (x, y , z) forme un repère orthogonal.

Le premier compartiment d'entrée 8 est situé en-dessous du deuxième compartiment d'entrée 11 et écarté de celui-ci. De même, le premier compartiment de sortie 16 est situé en-dessous du deuxième compartiment de sortie 19 et écarté de celui-ci.

Les premier et deuxième compartiments d'entrée 8, 11 sont décalés transversalement et verticalement vers le bas par rapport aux premier et deuxième compartiments de sortie 16, 19.

Ainsi, en coupe verticale perpendiculairement à l'axe x, le volume intérieur défini par la paroi latérale 25 présente globalement une portion centrale de forme sensiblement rectangulaire, et deux portions latérales de forme sensiblement rectangulaires décalées verticalement et transversalement l'une par rapport à l'autre.

Le réacteur 9 est divisé, le long de l'axe x, en plusieurs modules 26 par exemple sensiblement identiques, ici 4 modules, aptes à fonctionner en parallèle.

Un module 26 contient en partie centrale un bloc catalyseur 27 se présentant par exemple sous la forme d'un produit catalyseur (tel qu'un oxyde de vanadium) en vrac ou fixé sur un garnissage.

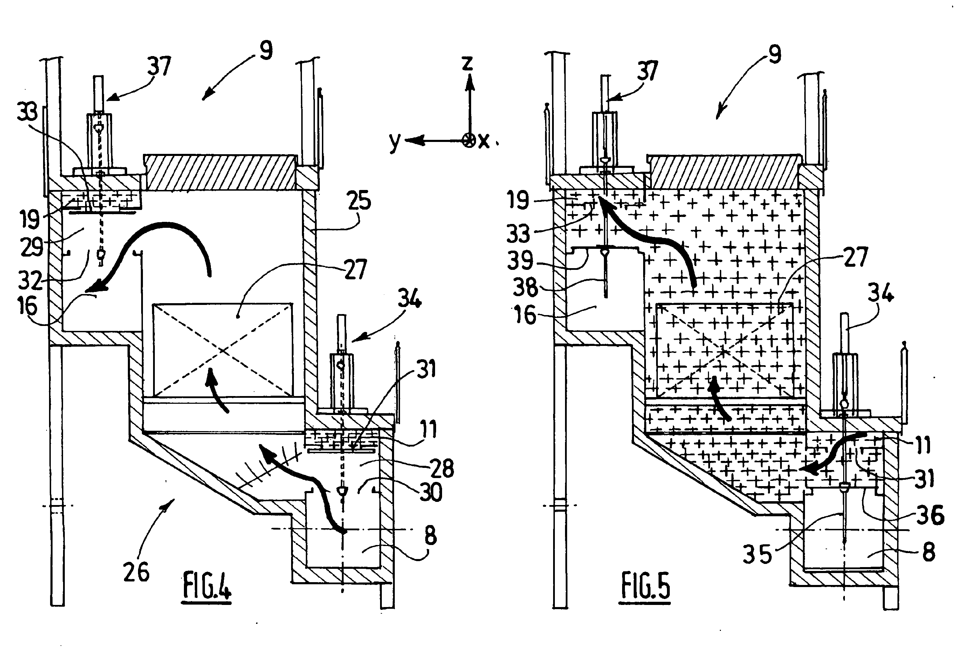

La figure 4 détaille les zones de circulation.

Le module 26 comprend également une zone d'entrée 28 intercalée entre les premier et deuxième compartiments d'entrée 8, 11 et une zone de sortie 29, intercalée entre les premier et deuxième compartiments de sortie 16, 19.

Le module 26 présente, dans la zone d'entrée 28, un premier orifice d'entrée 30 communiquant avec le premier compartiment d'entrée 8 et un deuxième orifice d'entrée 31 communiquant avec le deuxième compartiment d'entrée 11. Le module 26 présente, dans la zone de sortie 29, un premier orifice de sortie 32 communiquant avec le premier compartiment de sortie 16 et un deuxième orifice de sortie 33 communiquant avec le deuxième compartiment de sortie 19.

Un vérin double effet 34 comprenant une tige 35 verticale est placé au voisinage de la zone d'entrée 28, au-dessus du deuxième compartiment d'entrée 11. Sur la tige 35 est fixé un volet d'obturation 36 apte à être déplacé, par suite du coulissement de la tige 35, entre une première position, dans laquelle le volet 36 obture le premier orifice d'entrée 30 et une deuxième position, dans laquelle le volet 36 obture le deuxième orifice d'entrée 31.

De même, un vérin double effet 37 comprenant une tige 38 verticale est placé au voisinage de la zone de sortie 29, au-dessus du deuxième compartiment de sortie 19. Sur la tige 38 est fixé un volet d'obturation 39 apte à être déplacé, par suite du coulissement de la tige 38, entre une première position, dans laquelle le volet 39 obture le premier orifice de sortie 32 et une deuxième position, dans laquelle le volet 39 obture le deuxième orifice de sortie 33.

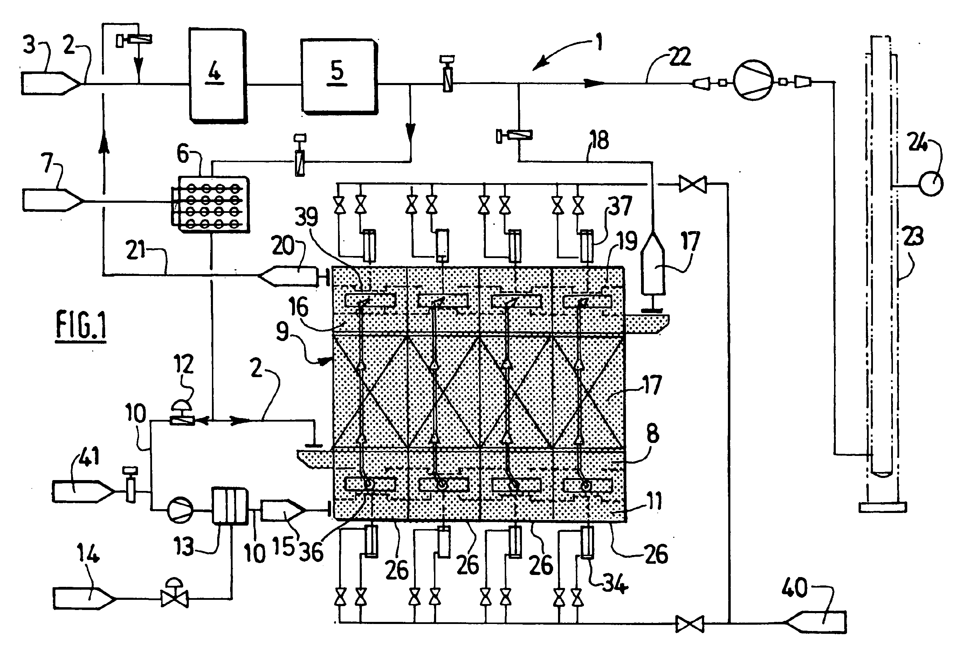

Les vérins 34, 37 sont actionnés par l'injection d'air comprimé 40 de façon sélective, grâce à un système d'électro-vannes (voir figure 1).

Le réacteur 9 forme ainsi un ensemble compact et de conception relativement simple.

On décrit à présent le procédé de dénoxification des gaz à traiter 3 en référence à la figure 4.

Comme indiqué précédemment, les gaz 3 sont amenés dans le premier compartiment d'entrée 8 du réacteur 9. Les vérins 34 du ou des modules aptes à assurer la dénoxification sont dans la position telle que le deuxième orifice d'entrée 31 est obturé, tandis que les vérins 37 sont dans la position telle que le deuxième orifice de sortie 33 est obturé. Les gaz pénètrent alors dans le module 26, traversent le bloc catalyseur 27 puis pénètrent dans le premier compartiment de sortie 16 avant d'être évacués par le conduit 18. En fonctionnement normal, tous les modules fonctionnent ainsi en parallèle.

La dénoxification se fait en parallèle dans les 4 modules. La température des gaz à traiter 3, en entrée du réacteur 9, est comprise entre 165 et 240°C, de préférence entre 185 et 200°C environ. A cette température, il se forme des sels qui sont adsorbés sur le catalyseur et en diminue progressivement l'efficacité.

L'activité du catalyseur est régulièrement suivie, et l'augmentation de la teneur en NH₃ dans les gaz rejetés à la cheminée, au-delà d'un certain seuil, indique que le catalyseur n'est plus suffisamment performant.

Un ou plusieurs modules 26 sont alors « isolés » et ne fonctionnent plus en phase de traitement, mais en phase de régénération (figure 5).

La phase de régénération comprend en particulier une étape de déch loration/désulfuration.

Pour le module 26 concerné, le vérin 34 est dans la position telle que le premier orifice d'entrée 30 est obturé, tandis que le vérin 37 est dans la position telle que le premier orifice de sortie 32 est obturé.

Ledit module 26 est alimenté par les gaz de régénération 15, qui ne sont autres qu'une partie des gaz à traiter 3 qui ont été chauffés, à une température comprise entre 280 et 300°C. A cette température, il se produit une sublimation
des sels déposés sur le catalyseur, qui sont évacués sous forme de gaz (notamment SO₂, HCl, NH₃) et donc la régénération du catalyseur. En effet, les gaz de régénération 15 pénètrent dans le module 26 par le deuxième compartiment d'entrée 11, traversent le bloc catalyseur 27 puis pénètrent dans le deuxième compartiment de sortie 19 avant d'être évacués par le conduit 21.

Simultanément, les gaz à traiter 3 pénètrent via les premiers compartiments d'entrée 8 et de sortie 16 dans les modules 26 en phase de dénoxification. Ainsi, par une simple commande des vérins 34, 37, la régénération d'un module n'entraîne pas l'arrêt de l'installation 1, et les gaz 3 peuvent toujours être traités en continu. On augmente ainsi la durée de vie du catalyseur sans perte de capacité de fonctionnement de l'installation.

Les produits sublimés sont évacués avec les gaz issus de la régénération 20, séparément des gaz traités 17. De ce fait, les produits sublimés ne sont pas rejetés à l'atmosphère mais sont réinjectés en entrée de l'installation 1 où ils pourront être traités comme les gaz 3. En fin de phase de régénération, de l'air ambiant 41 peut être injecté dans le deuxième compartiment d'entrée 11, afin de le purger et d'éviter ainsi les problèmes de corrosion.

## Revendications

1. Procédé de dénoxification de gaz dans un réacteur catalytique (9) comprenant au moins un module (26) contenant un catalyseur apte à permettre la dénoxification desdits gaz, ledit procédé comprenant :
- une phase de traitement lors de laquelle on introduit en entrée du réacteur (9) les gaz à traiter (3), on fait passer lesdits gaz à traiter (3) dans au moins un module (26), puis on évacue en sortie du réacteur (9) les gaz traités (17) ;
- une phase de régénération lors de laquelle on introduit en entrée du réacteur (9) les gaz de régénération (15), on fait passer lesdits gaz de régénération (15) dans au moins un module (26) à régénérer, puis on évacue séparément en sortie du réacteur (9) les gaz issus de la régénération (20) ;
**caractérisé en ce qu'**il comprend en outre l'étape consistant à faire passer les gaz issus de la régénération (20) dans au moins un appareil de traitement (4, 5) apte à diminuer la teneur desdits gaz (20) en au moins l'un des composés suivants : SO₂, HCl, avant de réintroduire lesdits gaz (20) issus de la régénération en entrée du réacteur.

2. Procédé selon la revendication 1, **caractérisé en ce que** le réacteur (9) comprend au moins deux modules (26) et **en ce que** le procédé comprend les étapes consistant à :
a) introduire les gaz à traiter (3) dans un premier compartiment d'entrée (8) du réacteur (9) et les faire traverser le ou les modules (26) en phase de traitement, puis évacuer les gaz traités (17) dans lesdits modules (26) depuis un premier compartiment de sortie (16) du réacteur (9) ;
b) introduire les gaz de régénération (15) dans un deuxième compartiment d'entrée (11) du réacteur et les faire traverser le ou les modules (26) en phase de régénération, puis évacuer les gaz issus de la régénération (20) depuis un deuxième compartiment de sortie (19) du réacteur (9), séparément des gaz traités (17).

3. Procédé selon la revendication 3, **caractérisé en ce que** les étapes a) et b) sont conduites simultanément, les modules (26) fonctionnant en parallèle.

4. Procédé selon l'une des revendications 1 à 3, **caractérisé en ce que** les gaz de régénération (15) sont obtenus par chauffage d'au moins une partie des gaz à traiter (3).

5. Installation de traitement des gaz, pour la mise en oeuvre du procédé selon l'une des revendications 1 à 4, comprenant :
- un réacteur catalytique (9) comprenant au moins un module (26) contenant un catalyseur apte à permettre la dénoxification desdits gaz ;
- au moins un conduit d'amenée (2, 10) des gaz en entrée du réacteur (9) et au moins un conduit d'évacuation (18, 20) des gaz en sortie du réacteur (9) ;
- des moyens aptes à permettre d'une part le rejet des gaz traités (18) et d'autre part la réintroduction en entrée des gaz issus de la régénération (15) ;
l'Installation étant **caractérisée en ce qu'**elle comprend :
- en amont du réacteur catalytique (9), au moins un appareil de traitement (4, 5) apte à diminuer la teneur des gaz à traiter (3) en au moins l'un des composés suivants : SO₂, HCl et,
- un conduit d'évacuation (21)des gaz issus de la régénération (20) connectée à son extrémité aval au conduit d'amenée (2) des gaz à traiter (3) en amont dudit appareil de traitement (4,5).

6. Installation selon la revendication 5, **caractérisée en ce qu'**elle comprend un conduit d'évacuation (18) des gaz traités (17) distinct du conduit d'évacuation (18) des gaz issus de la régénération (20).

## Patentansprüche

1. Verfahren zur Entfernung von Stickoxiden in einem katalytischen Reaktor (9), umfassend mindestens ein Modul (26), das einen Katalysator enthält, der die Entfernung von Stickoxiden aus den Gasen ermöglichen kann, wobei das Verfahren Folgendes umfasst:
- eine Behandlungsphase, während der man am Eingang des Reaktors (9) die zu behandelnden Gase (3) einführt, die zu behandelnden Gase (3) in mindestens ein Modul (26) überführt und dann die behandelten Gase (17) am Ausgang des Reaktors (9) abführt;
- eine Regenerationsphase, während der man am Eingang des Reaktors (9) Regenerationsgase (15) einführt, die Regenerationsgase (15) in mindestens ein Modul (26) zur Regeneration überführt und dann die aus der Regeneration stammenden Gase (20) separat am Ausgang des Reaktors (9) abführt;
**dadurch gekennzeichnet, dass** es außerdem einen weiteren Schritt umfasst, der darin besteht, dass man die aus der Regeneration stammenden Gase (20) in mindestens eine Behandlungsapparatur (4, 5), die den Gehalt der Gase (20) an mindestens einer der folgenden Verbindungen verringern kann: SO₂, HCl, überführt, bevor man die aus der Regeneration stammenden Gase (20) wieder in den Eingang des Reaktors einführt.

2. Verfahren nach Anspruch 1, **dadurch gekennzeichnet, dass** der Reaktor (9) mindestens zwei Module (26) umfasst und das Verfahren die Schritte umfasst, die daraus bestehen, dass man:
a) die zu behandelnden Gase (3) in ein erstes Eingangsabteil (8) des Reaktors (9) einführt und sie durch das oder die Module (26) in der Behandlungsphase führt und dann die in den Modulen (26) behandelten Gase (17) aus einem ersten Ausgangsabteil (16) des Reaktors (9) abführt;
b) die Regenerationsgase (15) in ein zweites Eingangsabteil (11) des Reaktors einführt und sie durch das oder die Module (26) in der Regenerationsphase führt und dann die aus der Regeneration stammenden Gase (20) separat von den behandelten Gasen (17) aus einem zweiten Ausgangsabteil (19) des Reaktors (9) abführt.

3. Verfahren nach Anspruch 3, **dadurch gekennzeichnet, dass** die Schritte a) und b) gleichzeitig durchgeführt werden, wobei die Module (26) parallel arbeiten.

4. Verfahren nach einem der Ansprüche 1 bis 3, **dadurch gekennzeichnet, dass** die Regenerationsgase (15) durch Erhitzen mindestens eines Teils der zu behandelnden Gase (3) erhalten werden.

5. Gasbehandlungsanlage zur Durchführung des Verfahrens nach einem der Ansprüche 1 bis 4, umfassend:
- einen katalytischen Reaktor (9) mit mindestens einem Modul (26), das einen Katalysator enthält, der die Entfernung von Stickoxiden aus den Gasen ermöglichen kann;
- mindestens eine Leitung (2, 10) zum Eintragen der Gase am Eingang des Reaktors (9) und mindestens eine Leitung (18, 21) zum Abführen der Gase am Ausgang des Reaktors (9);
- Mittel, die einerseits das Austragen der behandelten Gase (17) und andererseits das Wiedereintragen der aus der Regeneration stammenden Gase (15) ermöglichen können;
wobei die Anlage **dadurch gekennzeichnet ist, dass** sie Folgendes umfasst:
- stromaufwärts des katalytischen Reaktors (9) mindestens eine Behandlungsapparatur (4, 5), die den Gehalt der zu behandelnden Gase (3) an mindestens einer der folgenden Verbindungen verringern kann: SO₂, HCl, und
- eine Leitung (21) zum Abführen der aus der Regeneration stammenden Gase (20), die an ihrem stromabwärtigen Ende mit der Leitung (2) zum Eintragen der zu behandelnden Gase (3) stromaufwärts der Behandlungsapparatur (4, 5) verbunden ist.

6. Anlage nach Anspruch 5, **dadurch gekennzeichnet, dass** sie eine Leitung (18) zum Abführen der behandelten Gase (17), die von der Leitung (21) zum Abführen der aus der Regeneration stammenden Gase (20) verschieden ist, umfasst.

## Claims

1. Process for the DeNOx treatment of gases in a catalytic reactor (9) comprising at least one module (26) containing a catalyst capable of making possible the DeNOx treatment of the said gases, the said process comprising:
- a treatment phase during which the gases to be treated (3) are introduced at the inlet of the reactor (9), the said gases to be treated (3) are passed into at least one module (26) and then the treated gases (17) are discharged at the outlet of the reactor (9);
- a regeneration phase during which the regeneration gases (15) are introduced at the inlet of the reactor (9), the said regeneration gases (15) are passed into at least one module (26) to be regenerated and then the gases resulting from the regeneration (20) are discharged separately at the outlet of the reactor (9);
**characterized in that** it additionally comprises the step consisting in passing the gases resulting from the regeneration (20) into at least one treatment device (4, 5) capable of reducing the content of the said gases (20) in at least one of the following compounds: SO₂, HCl, before reintroducing the said gases (20) resulting from the regeneration at the inlet of the reactor.

2. Process according to Claim 1, **characterized in that** the reactor (9) comprises at least two modules (26) and that the process comprises the steps consisting in:
a) introducing the gases to be treated (3) into a first inlet compartment (8) of the reactor (9) and making them pass through the module or modules (26) in the treatment phase, then discharging the gases (17) treated in the said modules (26) from a first outlet compartment (16) of the reactor (9);
b) introducing the regeneration gases (15) into a second inlet compartment (11) of the reactor and making them pass through the module or modules (26) in the regeneration phase, then discharging the gases resulting from the regeneration (20) from a second outlet compartment (19) of the reactor (9), separately from the treated gases (17).

3. Process according to Claim 3, **characterized in that** steps a) and b) are carried out simultaneously, the modules (26) operating in parallel.

4. Process according to one of Claims 1 to 3, **characterized in that** the regeneration gases (15) are obtained by heating at least a portion of the gases to be treated (3).

5. Gas treatment plant for the implementation of the process according to one of Claims 1 to 4, comprising:
- a catalytic reactor (9) comprising at least one module (26) containing a catalyst capable of making possible the DeNOx treatment of the said gases;
- at least one pipe (2, 10) for introducing the gases at the inlet of the reactor (9) and at least one pipe (21, 20) for discharging the gases at the outlet of the reactor (9);
- means capable of making possible, on the one hand, the release of the treated gases (17) and, on the other hand, the reintroduction at the inlet of the gases resulting from the regeneration (15);
the plant being **characterized in that** it comprises:
- upstream of the catalytic reactor (9) at least one treatment device (4, 5) capable of reducing the content of the gases to be treated (3) in at least one of the following compounds: SO₂, HCl and,
- a pipe (21) for discharging the gases resulting from the regeneration (20) connected at its downstream end to the pipe (2) for introducing the gases to be treated (3) upstream of the said treatment device (4, 5).

6. Plant according to Claim 5, **characterized in that** it comprises a pipe (18) for discharging the treated gases (17) separate from the pipe (21) for discharging the gases resulting from the regeneration (20).
